# EUROPÄISCHE PATENTANMELDUNG

(11) **EP 3 718 711 A2**
(43) Veröffentlichungstag der Anmeldung: **07.10.2020**
(21) Anmeldenummer: 20166107.1
(22) Anmeldetag: 27.03.2020
(51) Int. Cl.: B25J 15/00, B25J 15/04, B65B 43/42, B65B 43/48, B65B 69/00

(54) **VERFAHREN ZUM BETRIEB EINES ROBOTERS, WERKZEUGKOPF FÜR EINEN ROBOTER SOWIE VERARBEITUNGSSTRASSE MIT EINEM ROBOTER**

(30) Priorität: 27.03.2019 DE 102019107893
(71) Anmelder: AutomationsRobotic GmbH, 84323 Massing (DE)
(72) Erfinder: Steiger, Alexander, 84028 Landshut (DE)
(74) Vertreter: Würmser, Julian

(57) **Zusammenfassung**

Es wird ein Verfahren zum Betrieb eines Roboters (2) mit einem Werkzeugkopf (4) angegeben, umfassend die Schritte:
- Bestücken einer insbesondere rechteckigen Aufnahmeform (6) mit einer Kassette (12), wobei die Aufnahmeform (6) mindestens zwei Seitenwände (10) und eine Öffnung zum Ausbringen der Kassette (12) umfasst,
- Greifen der Aufnahmeform (6) von oben mit einem Werkzeug (14), das ein Fixierelement (16) aufweist, derart, dass ein vorderer Schenkel (20a) und ein hinterer Schenkel (20b) des Fixierelements (16) einen Inhalt (22) der Kassette (12) an einer Vorderseite (V) bzw. an einer Rückseite (R) stützen,
- Verbringen der Aufnahmeform (6) mittels dem Werkzeug (14),
- Positionierung der Aufnahmeform in oder an einer Verarbeitungsmaschine (24),
Verschieben des Inhalts (22) der Kassette (12) mittels des Fixierelements (16) relativ zur Aufnahmeform (6) durch die Öffnung, um den Inhalt in die Verarbeitungsmaschine (24) einzubringen.

Weiterhin wird ein Werkzeugkopf (4) sowie eine Verarbeitungsstraße (38) angegeben.

## Beschreibung

Die Erfindung betrifft ein Verfahren zum Betrieb eines Roboters, einen Werkzeugkopf für einen Roboter sowie eine Verarbeitungsstraße mit einem Roboter.

Heutzutage werden für immer mehr Aufgaben (voll-)automatisierte Roboter herangezogen. So erfolgt beispielsweise auch ein Bestücken von Verarbeitungsmaschinen mit einem zu verarbeitenden Gut üblicherweise von Robotern. Diese haben sich hinsichtlich ihrer Arbeitsgeschwindigkeit und auch ihrer Arbeitsdauer für derartige Tätigkeiten als vorteilhaft erwiesen. Insbesondere bei Bestückungsvorgängen, bei denen es auf hohe Stückzahlen ankommt, sind Roboter vorteilhaft, da diese im Regelfall keine Pausenzeiten benötigen und somit hohe Stückzahlen schaffen.

Ein derartiges Einsatzgebiet ist beispielsweise eine Bestückung einer Verarbeitungsmaschine innerhalb des pharmazeutischen Bereichs. So müssen derartige Verarbeitungsmaschinen üblicherweise mit einer Vielzahl an Behältern, beispielsweise Insulinampullen bestückt werden. Pro Minute werden bei einer roboterunterstützten Bestückung einer Verarbeitungsmaschine üblicherweise zwischen 100 bis 1000 und vorzugsweise zwischen 300 und 800 Ampullen, die auch als Kartuschen bezeichnet werden können, der Verarbeitungsmaschine zugeführt. Bei den Ampullen kann es sich auch alternativ um Behälter, z.B. Glasfläschchen zur Aufnahme eines Stoffes handeln.

Eine Herausforderung bei einer robotergestützten Bestückung einer Verarbeitungsmaschine stellt eine Verbringung der oftmals leicht zerbrechlichen Ampullen dar. Ebenso müssen derartige Ampullen oftmals aufrechtstehend in die Verarbeitungsmaschine eingespeist werden, sodass hierbei besondere Herausforderungen an eine robotergestützte Bestückung der Verarbeitungsmaschine gestellt werden.

Ausgehend hiervon liegt der Erfindung die Aufgabe zugrunde, ein Verfahren anzugeben, mit dessen Hilfe eine automatische und insbesondere zuverlässige Bestückung einer Verarbeitungsmaschine ermöglicht ist.

Die Aufgabe wird erfindungsgemäß gelöst durch ein Verfahren mit den Merkmalen des Anspruchs 1. Vorteilhafte Ausgestaltungen, Weiterbildungen und Varianten sind Gegenstand der Unteransprüche 2 bis 4.

Insbesondere wird die Aufgabe gelöst durch ein Verfahren zum Betrieb eines Roboters mit einem Werkzeugkopf, umfassend die Schritte:
- Bestücken einer insbesondere rechteckigen Aufnahmeform mit einer Kassette, wobei die Aufnahmeform mindestens zwei Seitenwände und eine Öffnung umfasst,
- Greifen der Aufnahmeform von oben mit einem Werkzeug, das ein Fixierelement aufweist, derart, dass ein vorderer Schenkel und ein hinterer Schenkel des Fixierelements einen Inhalt der Kassette an einer Vorderseite bzw. an einer Rückseite stützen,
- Verbringen der Aufnahmeform mittels dem Werkzeug,
- Positionierung der Aufnahmeform in oder an einer Verarbeitungsmaschine,
- Verschieben des Inhalts der Kassette mittels des Fixierelements relativ zur Aufnahmeform durch die Öffnung, um den Inhalt in die Verarbeitungsmaschine einzubringen.

Die Aufnahmeform kann hierbei auch als Negativform bezeichnet werden. Dieser Bezeichnung liegt der Gedanke zugrunde, dass die Aufnahmeform üblicherweise eine zur Kassette invertierte Form, also eine Negativform, aufweist, damit die Kassette von der Aufnahmeform aufgenommen werden kann. Die Aufnahmeform kann in einer Ausführungsform einteilig, also monolithisch, aber auch in einer alternativen Ausführungsform mehrteilig ausgebildet sein. Gemäß der alternativen Ausführungsform sind beispielsweise die mindestens zwei Seitenwände an der Aufnahmeform angeordnet, z.B. angeschraubt.

Insbesondere dient die Öffnung zum Einbringen der Kassette und/oder zum Ausbringen des Inhalts der Kassette. Unter der Kassette kann im einfachsten Fall ein rechteckiger Karton aus einem nicht selbsttragenden Material verstanden werden, in dem der Inhalt angeordnet ist. Unter dem nicht selbsttragenden Material kann ein Material verstanden werden, welches keine ausreichende Stabilität im Hinblick auf seine Festigkeit aufweist, um den Inhalt der Kassette bei einem Anheben der Kassette selbstständig zu tragen. Mit anderen Worten kann unter dem nicht selbsttragenden Material ein weiches Material, wie beispielsweise Pappe oder Kunststoff verstanden werden. Somit eignet sich das beschriebene Verfahren vorzugsweise für ein Verbringen von Kassetten, die aus dem vorstehend beschriebenen Material gebildet sind, da die Kassette in der Aufnahmeform angeordnet ist und somit eine ausreichende Stützwirkung gegeben ist. Die Kassette kann auch als Tray bezeichnet werden und stellt in einer Ausführungsform eine Aufbewahrungsform für die Ampullen nach Art einer Schachtel bzw. nach Art eines Karton dar.

In einer Ausführungsform handelt es sich bei dem Inhalt um einen nicht standfesten Inhalt. Unter dem nicht standfesten Inhalt kann ein Inhalt verstanden werden, der bei einem Verbringen und einem damit verbundenen Schwanken leicht umfällt. Insbesondere handelt es sich bei dem Inhalt um Ampullen, vorzugsweise um Zylinderampullen und speziell um Ampullen für den pharmazeutischen Bereich, beispielsweise um Insulinampullen.

Durch die Ausgestaltung des Fixierelements mit dem vorderen Schenkel und dem hinteren Schenkel weist das Fixierelement eine U-Profil-Form auf. Bei gegriffener Aufnahmeform mit dem Werkzeug ist somit der Inhalt der Kassette zwischen den beiden Schenkeln angeordnet und wird von diesen an der Vorderseite beziehungsweise an der Rückseite gestützt. Das Fixierelement kann in einer Ausführungsform einteilig, also monolithisch, ausgebildet sein. In einer alternativen Ausführungsform kann das Fixierelement mehrteilig ausgebildet sind. So können gemäß dieser alternativen Ausführungsform beispielsweise die beiden Schenkel an dem Fixierelement angeordnet sein.

Unter dem Verschieben des Inhalts der Kassette relativ zur Aufnahmeform kann verstanden werden, dass der Inhalt aus der Kassette herausgeschoben wird, während die Kassette an ihrer Position verbleibt. Mit anderen Worten wird die Kassette durch das Herausschieben des Inhalts entleert. Soweit es sich bei der Kassette um einen Karton handelt kann hierbei eine Lasche des Kartons heruntergedrückt bzw. geklappt werden, um den Inhalt aus der Kassette herauszuschieben.

Unter der Verarbeitungsmaschine kann beispielsweise eine Etikettiermaschine für die Ampullen oder allgemein eine Maschine verstanden werden, die dazu eingerichtet ist, speziell den Inhalt der Kassette weiterzuverarbeiten.

Durch das beschriebene Verfahren ist es erreicht, eine Verarbeitungsmaschine einfach mit einem Inhalt einer Kassette zu bestücken (dieser Vorgang kann auch als Feed-In-Vorgang bezeichnet werden). Insbesondere ist hierdurch auch eine (voll-)automatische Bestückung erreicht, wodurch Zeit und Kosten gespart werden. Weiterhin ist das beschriebene Verfahren vorteilhaft bei der Bestückung der Verarbeitungsmaschine mit Ampullen, da durch das Fixierelement und insbesondere die Stützwirkung der beiden Schenkel des Fixierelements z.B. ein Umfallen und/oder Herabfallen der Ampullen während der Verbringung zur Verarbeitungsmaschine und/oder einer Positionierung in/an der Verarbeitungsmaschine verhindert ist.

In einer Ausführungsform ist an zumindest einer der Seitenwände eine Stützeinheit mit einer verschiebbaren Stützplatte angeordnet. Unter verschiebbar kann hierbei eine Verschiebbarkeit der Stützplatte relativ zu der der Stützplatte gegenüberliegenden Seitenwand der Aufnahmeform verstanden werden, um einen Abstand zwischen der Stützplatte und der der Stützplatte gegenüberliegenden Seitenwand einzustellen.

Die Einstellung des Abstands erfolgt hierbei in Abhängigkeit der Kassette und insbesondere in Abhängigkeit der Außenmaße der Kassette, mit der die Aufnahmeform bestückt werden soll. Hierdurch ist erreicht, dass zum einen auf Toleranzen in Bezug auf die Außenmaße der zu verbringenden Kassetten und zum anderen auf diverse Größen von Kassetten eingegangen werden kann. D.h. es muss für unterschiedlich große Kassetten nicht jeweils eine eigene Aufnahmeform herangezogen werden, sondern es kann ein durch die Rückseite sowie die zwei Seitenwände ausgebildeter Aufnahmeraum der Aufnahmeform an die Außenmaße der aufzunehmenden Kassette angepasst werden.

Die Einstellung des Abstands hat zudem den Vorteil, dass eine innerhalb der Aufnahmeform aufgenommene Kassette zuverlässig und stabil gehalten werden kann. Somit ist nicht nur eine mechanische Unterstützung der Wände der Kassette, sondern auch eine stabile Aufnahme der Kassette innerhalb der Aufnahmeform während des Verbringens erreicht, was insgesamt den sicheren Transport des Inhalts der Kassette vorteilhaft beeinflusst.

Um den Abstand einzustellen und somit die Führungsplatte des Führungselements zu verschieben, weist das Führungselement ein Verschiebeelement auf, das mit einem Spannelement zusammenwirkt. Das Spannelement ist hierbei kein Teil des Führungselements, sondern bevorzugt Teil einer Ablageeinheit, z.B. einer Beladestation, auf die die Aufnahmeformen abgelegt und mit den Kassetten bestückt werden. Um Wiederholungen zu vermeiden, werden weitere Ausführungen, die insbesondere das Verschieben der Führungsplatte und damit das Einstellen des Abstands betreffen, nachfolgend im Rahmen der Ausführungen zu dem Werkzeugkopf erläutert.

In einer Ausführungsform wird das Werkzeug zum Greifen der Aufnahmeform derart mit dieser mechanisch gekoppelt, dass ein Verbindungselement mit zumindest einem Haltestift der Aufnahmeform arretiert. In einer weiteren Ausführungsform weist die Aufnahmeform zwei Haltestifte auf, mit denen das Verbindungselement arretiert wird. Unter Arretieren kann ein mechanischer Vorgang eines Feststellens beweglicher Teile (hier: Aufnahmeform und Werkzeug) verstanden werden. Die Arretierung erfolgt in einer Ausführungsform beispielsweise derart, dass das Verbindungselement mit dem zumindest einen Haltestift eine Klemm- oder Rastverbindung ausbildet. Der Vorteil hierbei liegt darin, dass auf eine einfache Art eine Arretierung des Werkzeugs mit der Aufnahmeform erreicht ist.

In einer weiteren Ausführungsform ist das Verbindungselement derart mit der Aufnahmeform mechanisch gekoppelt, insbesondere arretiert, dass die mechanische Kopplung in zwei Richtungen lösbar ist. Das Verbindungselement ist daher dazu eingerichtet die Arretierung mit dem zumindest einen Haltestift der Aufnahmeform in zwei Richtungen zu lösen. Diese Ausführungsform beruht auf der Überlegung, zum einen die Aufnahmeform von oben mittels dem Werkzeug (reversibel) zu greifen und zum anderen die Arretierung zum Verschieben des Inhalts in einer Längsrichtung zu lösen. Somit kann unter den zwei Richtungen zum einen eine Richtung von oben, also entlang einer Senkrechten und zum anderen eine Richtung entlang einer orthogonal zur Senkrechten orientierten Längsrichtung verstanden werden. Hierdurch ist daher sowohl das Greifen der Aufnahmeform, als auch das Verschieben des Inhalts der Kassette und das damit verbundene Lösen der Arretierung zwischen Werkzeug und Aufnahmeform auf eine einfache Art sichergestellt.

In einer Ausführungsform erfolgt das Verschieben des Inhalts der Kassette in einer Geschwindigkeit, die einer Fördergeschwindigkeit eines Förderbandes der Verarbeitungsmaschine entspricht. Hierdurch ist ein prozesssicheres und fehlerreduziertes Bestücken der Verarbeitungsmaschine sicherstellt. D.h. durch das Verschieben in der Geschwindigkeit, die auch der Fördergeschwindigkeit des Förderbandes entspricht, ist beispielsweise eine Gefahr des Umfallens des Inhalts und speziell der Ampullen beim Bestücken der Verarbeitungsmaschine reduziert.

In einer Ausführungsform wird die Aufnahmeform derart und insbesondere von oben von dem Werkzeug gegriffen, dass die beiden Schenkel des Fixierelements jeweils zwischen eine Wandung der Kassette und dem Inhalt der Kassette angeordnet werden. Der Vorteil ist, dass hierdurch beim Verschieben lediglich der Inhalt, nicht aber die Kassette in die Verarbeitungsmaschine eingebracht wird. Ergänzend kann vorgesehen sein, dass zuvor die Kassette an einer Öffnungsvorrichtung geöffnet wird, also beispielsweise die Wandung der als Pappkarton ausgebildeten Kassette aufgebogen wird, bevor die Aufnahmeform mit der Kassette in oder an der Verarbeitungsmaschine positioniert wird.

Die Aufgabe wird weiterhin erfindungsgemäß gelöst durch einen Werkzeugkopf mit den Merkmalen des Anspruchs 5. Vorteilhafte Ausgestaltungen, Weiterbildungen und Varianten hierzu sind Gegenstand der Unteransprüche 6 bis 14.

Der Werkzeugkopf weist ein Werkzeug sowie eine Aufnahmeform zur Aufnahme einer Kassette auf, wobei die Aufnahmeform einen Boden, mindestens zwei Seitenwände und eine Öffnung umfasst. Die Aufnahmeform ist in einer Ausführungsform wannenartig ausgebildet. Weiterhin ist die Aufnahmeform in einer Ausführungsform lösbar mit dem Werkzeug verbindbar und/oder verbunden. Somit ist es ermöglicht, mehrere Aufnahmeformen bereitzustellen, die mit jeweils einer Kassette bestückt sind und beispielsweise abwechselnd von dem Werkzeug zur Bestückung der Verarbeitungsmaschine mit dem Inhalt der Kassette gegriffen werden. Der Vorteil dieser Ausführungsform liegt in der gesteigerten Prozessgeschwindigkeit. Beispielsweise ist es in dieser Ausführungsform ermöglicht, die Verarbeitungsmaschine mit bis zu 600 Ampullen pro Minute zu bestücken.

Insbesondere handelt es sich bei dem Werkzeugkopf um den bereits im Rahmen des Verfahrens erläuterten Werkzeugkopf.

In einer Ausführungsform umfasst das Werkzeug ein Fixierelement mit einem vorderen Schenkel und einem hinteren Schenkel, wobei in mindestens einem (verbundenen) Zustand mindestens ein Schenkel die Öffnung der Aufnahmeform mindestens teilweise verschließt. Vorzugsweise begrenzen die Schenkel in dem Zustand die Aufnahmeform vorder- und rückseitig. Hierdurch wird erreicht, dass der Inhalt der Kassette zuverlässig vor einem Heraus- und/oder Umfallen geschützt wird.

Weiterhin weist die rechteckige Aufnahmeform in einer Ausführungsform eine Länge im Bereich zwischen 20cm und 80cm, insbesondere zwischen 30cm und 60cm, eine Breite im Bereich zwischen 15cm und 50cm, insbesondere zwischen 20cm und 30cm sowie eine Höhe im Bereich zwischen 3cm und 15cm auf. Die Aufnahmeform ist insbesondere an die Außenmaße der Kassette angepasst, um eine Anordnung der Kassette innerhalb der Aufnahmeform sicherzustellen.

Gemäß einer Ausführungsform weist die Aufnahmeform im Boden zumindest ein Halteloch auf. Das Halteloch dient einer Fixierung der Kassette während der Bestückung der Verarbeitungsmaschine mit dem Inhalt der Kassette, also während dem Verschieben des Inhalts relativ zur Kassette. Hierzu kann beispielswiese vorgesehen sein, dass mittels einer Unterdruckvorrichtung die Kassette durch das Halteloch hindurch gehalten wird, während das Fixierelement den Inhalt der Kassette verschiebt.

Weiterhin weist das Werkzeug in einer Ausführungsform eine L-Form auf mit einer Befestigungsplatte zur reversiblen Anordnung des Werkzeuges an einem Roboter sowie einem an der Befestigungsplatte seitlich angeordneten Arm, wobei an dem Arm das Fixierelement angeordnet ist. Zur reversiblen Anordnung des Werkzeuges an dem Roboter ist beispielsweise vorgesehen, dass die Befestigungsplatte an einem Befestigungsflansch des Roboters angeschraubt wird. Eine derartige Lösung hat sich hinsichtlich einer ausreichenden mechanischen Fixierung bei gleichzeitiger Reversibilität als vorteilhaft erwiesen.

Derartige Schraubverbindungen sind zudem in verschiedenen Varianten auf dem freien Markt erhältlich, um individuellen Anforderungen des Werkzeuges und/oder des Roboters gerecht zu werden.

In einer Ausführungsform ist der Arm an einer der Verarbeitungsmaschine abgewandten Seite der Befestigungsplatte an dieser angeordnet. D.h., dass der Arm an der Seite der Befestigungsplatte angeordnet ist, die, wenn sich der Werkzeugkopf in einer Position in oder an der Verarbeitungsmaschine befindet, der Verarbeitungsmaschine abgewandt ist. Hierdurch ist sichergestellt, dass wenig Teile des Werkzeugkopfes in einen Bereich gelangen, in dem bewegliche Teile der Verarbeitungsmaschine agieren. Somit ist einer Kollisionsgefahr vorgebeugt.

In einer Ausführungsform ist zwischen der Befestigungsplatte und dem Fixierelement ein Spalt ausgebildet. Der Spalt dient dazu, einen Schieber der Verarbeitungsmaschine aufzunehmen, der dazu eingerichtet ist, den durch das Verschieben in die Verarbeitungsmaschine eingebrachten Inhalt der Kassette aufzunehmen und weiter in die Verarbeitungsmaschine zu schieben. D.h. der Schieber dient als ein Anschlag für den Inhalt der Kassette, wenn der Werkzeugkopf nach dem Verschieben nach oben hin verfährt und somit die Schenkel den Inhalt nicht mehr stützen.

In einer Ausführungsform ist vorgesehen, dass bei in der Aufnahmeform einsitzendem Fixierelement zwischen jeweils einer der beiden Seitenwände der Aufnahmeform und dem Fixierelement ein Seitenspalt mit einer Breite von 2% bis 10%, alternativ mit einer Breite von 4% bis 8% und weiterhin alternativ mit einer Breite von 6% einer Gesamtbreite der Aufnahmeform ausgebildet ist. Durch die Ausbildung des Seitenspalts ist sichergestellt, dass das Fixierelement beim Verschieben des Inhalts durch die Öffnung nicht an den Seitenwänden anliegt und das Verschieben hierdurch beeinträchtigt wird.

Zweckdienlicherweise zumindest eine Seitenwand der Aufnahmeform die bereits im Rahmen des Verfahrens beschriebene Stützeinheit auf. Die Stützeinheit ist hierbei, wie bereits ausgeführt, an zumindest einer Seitenwand der Aufnahmeform angeordnet, d.h. die Aufnahmeform weist einseitig eine Stützeinheit auf.

Die Stützeinheit weist eine Stützplatte sowie einen Zylinder mit einem in dem Zylinder einsitzenden und federgelagerten Kolben auf. Die Stützplatte ist dabei an dem Kolben angeordnet und in Richtung der der Stützeinheit gegenüberliegenden Seitenwand federkraftbaufschlagt und/oder federkraftbaufschlagbar. Unter federkraftbeaufschlagt kann hierbei verstanden werden, dass innerhalb des Zylinders ein Federelement angeordnet ist, welches derart an dem Kolben angeordnet ist, dass es in Richtung der Seitenwand, an der die Stützeinheit angeordnet ist, spannbar bzw. stauchbar ist. Mit anderen Worten wird der Kolben und auch die an dem Kolben angeordnete Stützplatte durch das gespannte Federelement in Richtung des Aufnahmeraums mit einer Federkraft beaufschlagt. Beispielsweise handelt es sich bei dem Federelement um eine Helixfeder.

Durch die Federkraft, die durch das Federelement ausgeübt wird, ist ein stabiles Halten der innerhalb des Aufnahmeraums der Aufnahmeform angeordneten Kassette sichergestellt, da die Stützplatte durch die Federkraft gegen die Kassette gedrückt wird. Hierbei ist die von dem Federelement bereitgestellte Federkraft jedoch lediglich so hoch, dass die Kassette zwar zuverlässig und sicher gehalten wird, jedoch die Kassette und speziell der Inhalt der Kassette nicht beschädigt, z.B. nicht gequetscht wird.

Zudem ist in einer Ausführungsform die Stützeinheit und speziell die Stützplatte, der Kolben und das Federelement derart ausgebildet und bemessen, dass die Stützplatte lediglich bis zu einer vorgegebenen und definierten Stellung in den Aufnahmeraum verschiebbar ist. Beispielsweise ist die Stützplatte somit maximal 2cm bis 6cm von der Seitenwand, an der die Stützeinheit angeordnet ist, weg, also in den Aufnahmeraum hinein, verschiebbar.

In einer Ausführungsform weist die Stützeinheit ein Verschiebeelement auf, das an dem Kolben angeordnet ist und aus dem Zylinder herausragt, also von außen zugänglich ist. Unter von außen zugänglich kann hierbei verstanden werden, dass das Verschiebeelement von außerhalb des Zylinders zugänglich ist, ohne diesen öffnen zu müssen. Das Verschiebeelement ist ferner dazu ausgebildet, mit dem Spannelement eines Ablageortes, insbesondere einer Beladestation zur Einstellung des Abstandes zusammenzuwirken. Hierzu sind das Verschiebeelement und das Spannelement korrespondierend zueinander ausgebildet.

Das Verschiebeelement und das korrespondierende Spannelement wirken insbesondere derart zusammen, dass die Stützplatte von einer entspannten Stellung in eine vorgespannte Stellung verschiebbar ist. Unter der entspannten Stellung kann hierbei die Stellung des Kolbens und somit der Stützplatte verstanden werden, die dieser einnimmt, wenn das Federelement vollständig entspannt ist und somit keine Federkraft in Richtung des Aufnahmeraums ausübt.

Unter der vorgespannten Stellung kann im Gegensatz hierzu eine Stellung des Kolbens und auch der Stützplatte verstanden werden, in der das Federelement maximal gestaucht ist und somit eine maximale Federkraft in Richtung des Aufnahmeraums wirkt. Um jedoch die Kassette, wie bereits erwähnt, sicher innerhalb der Aufnahmeform zu halten, ist die Stützplatte, die beim Halten vorzugsweise an der entsprechenden Seitenwand der Kassette anliegt, in einer Stellung zwischen der entspannten Stellung und der vorgespannten Stellung angeordnet. Hierdurch wird sichergestellt, dass zum einen eine (Halte-)Kraft auf die Kassette ausgeübt wird, diese Kraft jedoch nicht so groß ist, dass die Kassette und/oder ihr Inhalt beschädigt wird.

Gemäß einer weiteren Ausführungsform weist das Fixierelement abgerundete Kanten auf. Speziell weisen die Schenkel abgerundete Kanten auf. Dies hat den Vorteil, dass beim Greifen von oben und somit einem Anordnen der Schenkel innerhalb der Kassette, der Inhalt nicht beschädigt wird. Insbesondere bei Ampullen aus Glas hat sich eine derartige Ausführungsform als vorteilhaft erwiesen, um Beschädigungen zu vermeiden.

Gemäß einer alternativen Ausführungsform weist das Werkzeug und insbesondere das Fixierelement zwei relativ zueinander verfahrbare Halter auf, wobei die Halter als Kämme ausgebildet sind. Der an der Vorderseite des Werkzeugkopfes angeordnete Halter ist zudem in einer Hochachse, also senkrecht nach oben verfahrbar. Der Werkzeugkopf dieser alternativen Ausführungsform dient insbesondere einem Bestücken der Kassette mit einem die Verarbeitungsmaschine verlassenden Inhalt, speziell Ampullen.

Die Aufgabe wird weiterhin erfindungsgemäß gelöst durch eine Verarbeitungsstraße mit den Merkmalen des Anspruchs 15.

Die Verarbeitungsstraße ist in einer Ausführungsform dazu eingerichtet, das vorstehend beschriebene Verfahren durchzuführen.

Weiterhin weist die Verarbeitungsstraße in einer Ausführungsform einen Roboter sowie eine Verarbeitungsmaschine auf, wobei der Roboter einen Werkzeugkopf aufweist. Bei der Verarbeitungsmaschine, dem Roboter und insbesondere dem Werkzeugkopf handelt es sich hierbei um die bereits vorstehend beschriebenen Komponenten.

Gemäß einer Ausführungsform weist die Verarbeitungsmaschine eine Halterung, insbesondere mindestens einen Zapfen, zum Halten der Aufnahmeform, auf.

Hierdurch wird verhindert, dass beim Verschieben des Inhalts der Kassette die Aufnahmeform mit verschoben wird. Die Halterung, insbesondere der zumindest eine Zapfen dient somit als ein Anschlag für die Aufnahmeform.

In einer Ausführungsform ist eine Steuereinheit vorgesehen, die dazu eingerichtet ist, den Roboter mit dem Werkzeugkopf derart anzusteuern, dass die Verarbeitungsmaschine mit dem innerhalb der Kassette befindlichen Inhalt bestückt wird und/oder das bereits vorstehend beschriebene Verfahren ausgeführt wird. Die Steuereinheit ist hierbei Teil der Verarbeitungsstraße. Alternativ ist die Steuereinheit separat ausgeführt, also kein Teil der Verarbeitungsstraße.

Weiterhin ist gemäß einer Ausführungsform eine Identifikationseinheit vorgesehen, die dazu eingerichtet ist, einen Fehler im Inhalt der Kassette zu identifizieren. Unter dem Fehler im Inhalt kann beispielsweise eine oder mehrere umgefallene und/oder zerbrochene Ampullen verstanden werden. Weiterhin kann unter dem Fehler auch eine fehlerhafte/defekte Kassette verstanden werden. Wird beispielsweise von der Identifikationseinheit ein derartiger Fehler erkannt, so gibt diese ein Signal an die Steuereinheit aus, sodass der Bestückungsprozess unterbunden wird und/oder ein Warnsignal ausgegeben wird.

Die im Hinblick auf das Verfahren aufgeführten Vorteile und genannte Ausführungsformen sind sinngemäß auf den Werkzeugkopf sowie auf die Verarbeitungsstraße anwendbar und umgekehrt.

Das beschriebene Verfahren ist nicht auf einen Einsatzbereich im pharmazeutischen Bereich beschränkt.

Ausführungsbeispiele der Erfindung werden nachfolgend anhand der Figuren näher erläutert.

Diese zeigen teilweise in stark vereinfachten Darstellungen:
- Fig. 1: eine perspektivische Ansicht einer Aufnahmeform gemäß einer ersten Ausgestaltungsvariante,
- Fig.2: eine Frontansicht auf die Aufnahmeform gemäß Fig. 1,
- Fig. 3: eine Draufsicht auf die Aufnahmeform gemäß Fig. 1,
- Fig. 4: eine perspektivische Ansicht eines Werkzeugkopfes mit arretierter Aufnahmeform,
- Fig. 5: eine Draufsicht auf eine Verarbeitungsstraße mit einem Roboter und einer Verarbeitungsmaschine,
- Fig. 6: eine alternative Ausführungsform des Werkzeugkopfes,
- Fig. 7: eine Frontansicht auf eine Aufnahmeform gemäß einer zweiten Ausgestaltungsvariante in einer entspannten Stellung,
- Fig. 8: eine Frontansicht der Aufnahmeform gemäß der zweiten Ausgestaltungsform in einer vorgespannten Stellung,
- Fig. 9: einen Querschnitt durch die Aufnahmeform gemäß der zweiten Ausgestaltungsvariante in der entspannten Stellung,
- Fig. 10: einen Querschnitt durch die Aufnahmeform gemäß der zweiten Ausgestaltungsvariante in der vorgespannten Stellung,
- Fig. 11: einen Querschnitt durch eine Aufnahmeform gemäß einer dritten Ausgestaltungsvariante in der entspannten Stellung sowie
- Fig. 12: einen Querschnitt durch die Aufnahmeform gemäß der dritten Ausgestaltungsvariante in der vorgespannten Stellung.

In den Figuren sind gleichwirkende Teile mit den gleichen Bezugszeichen dargestellt.

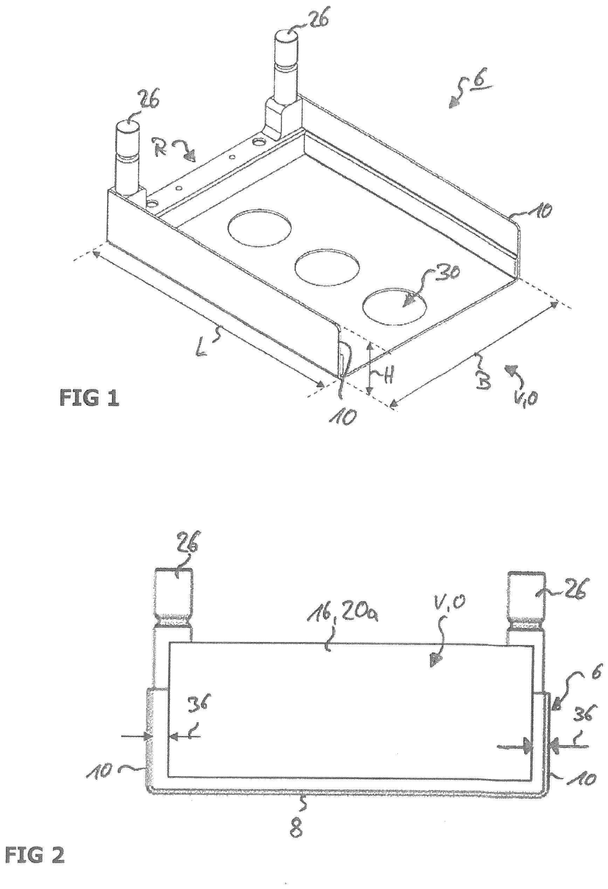

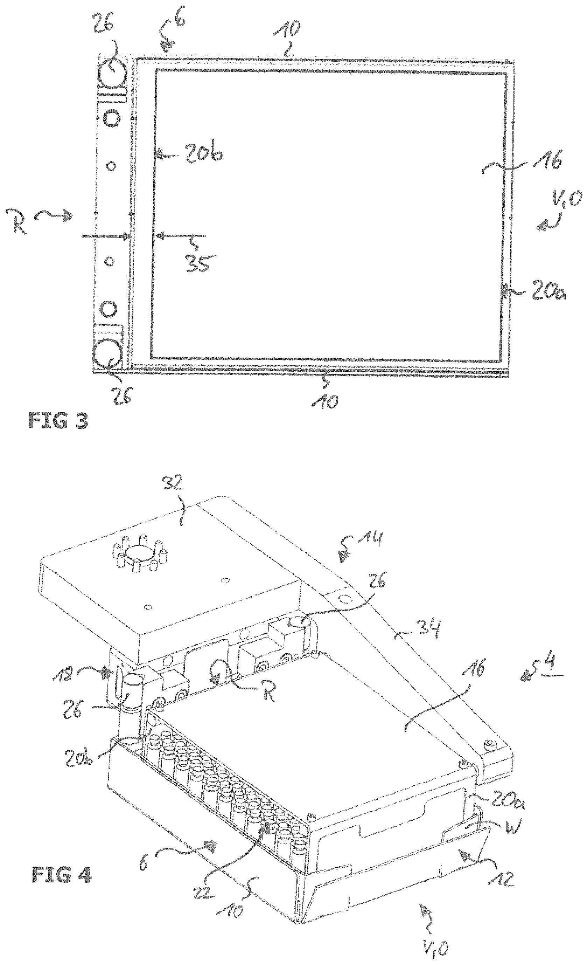

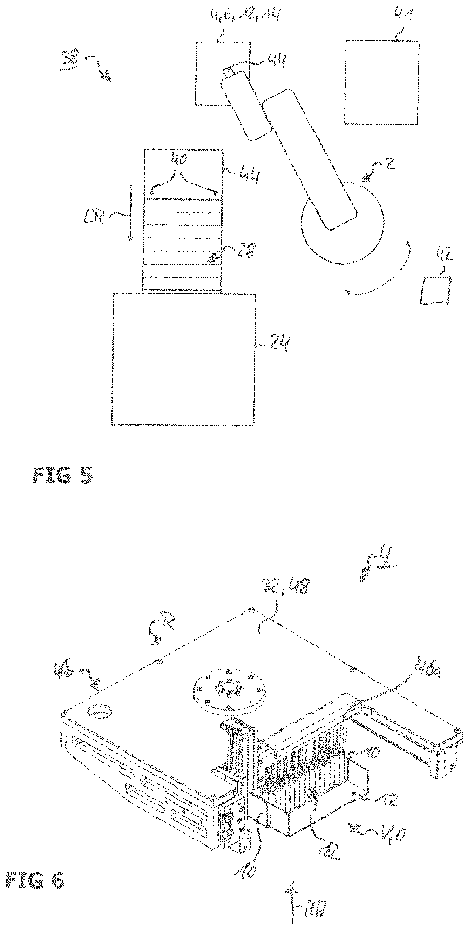

Die in Fig. 1 dargestellte rechteckige Aufnahmeform 6 weist einen Boden 8 sowie zwei Seitenwände 10 auf. Der Boden 8 weist in der Ausführungsform gemäß Fig.1 drei Haltelöcher 30 auf. Die Haltelöcher 30 dienen einer Fixierung einer Kassette 12 (vgl. Fig. 4) während einem Verschieben eines Inhalts 22 (vgl. Fig. 4) zur Bestückung einer Verarbeitungsmaschine (vgl. Fig. 5) mit dem Inhalt 22.

Weiterhin weist die Aufnahmeform 6 eine Öffnung O auf, ist also an einer Vorderseite V offen ausgebildet. An einer Rückseite R der Aufnahmeform 6 sind in der Ausführungsform gemäß Fig. 1 zwei Haltestifte 26 angeordnet, die senkrecht zum Boden 8 orientiert sind.

Die Haltestifte 26 dienen einer reversiblen Arretierung mit einem Verbindungselement 18 (vgl. Fig. 4) eines Werkzeuges 14 (vgl. Fig. 4).

In Fig. 2 ist eine Frontansicht auf die Aufnahmeform 6 gemäß der Ausführungsform gemäß Fig. 1 gezeigt. Zudem ist in der Fig. 2 ein in der Aufnahmeform 6 einsitzendes Fixierelement 16 (vgl. Fig. 4) dargestellt. Zwischen jeweils einer der beiden Seitenwände 10 der Aufnahmeform 6 und dem Fixierelement 16 ist ein Seitenspalt 36 ausgebildet, der eine Breite von 2% bis 10% einer Gesamtbreite B der Aufnahmeform 6 aufweist. Durch den Seitenspalt 36 wird sichergestellt, dass das Verschieben des Inhalts 22 durch das Fixierelement 16 nicht durch ein Anliegen des Fixierelements 16 an den Seitenwänden 10 beeinträchtigt wird. Durch das in der Aufnahmeform 6 einsitzende Fixierelement 16 wird zudem die Öffnung O zum Positionieren der Aufnahmeform 6 zumindest teilweise verschlossen und z.B. ein Herausfallen des Inhaltes der Kassette 12 verhindert.

Fig. 3 zeigt eine Draufsicht der bereits in der Fig. 1 und der Fig. 2 gezeigten Aufnahmeform 6. In Fig. 3 ist ebenfalls das in der Aufnahmeform 6 angeordnete Fixierelement 16 dargestellt. Zwischen einer Rückseite R der Aufnahmeform 6 und insbesondere zwischen einer Befestigungsplatte 32 (vgl. Fig. 4) und dem Fixierelement 16 ist ein Spalt 35 ausgebildet. In diesem Spalt 35 sitzt beim Bestückungsvorgang ein nicht dargestellter Schieber ein, der als ein Anschlag für den Inhalt 22 dient, sodass das Fixierelement 16 nach oben hin den Inhalt 22 frei geben kann. Der Schieber ist hierbei Teil der Verarbeitungsmaschine 24. Gemäß einer alternativen Ausführungsform ist der Schieber kein Teil der Verarbeitungsmaschine 24 und beispielsweise im Rahmen einer Nachrüstbarkeit als ein separates Teil an einer bereits montierten Verarbeitungsmaschine 24 anordbar.

Der in Fig. 4 perspektivisch dargestellte Werkzeugkopf 4 weist die bereits erwähnte Befestigungsplatte 32 auf, mittels der er an einem in Fig. 4 nicht dargestellten Roboter 2 (vgl. Fig. 5) anordbar ist. In der Ausführungsform gemäß Fig. 4 wird der Werkzeugkopf 4 zur Anordnung an dem Roboter 2 an diesen angeschraubt. Weiterhin weist der Werkzeugkopf 4 das Werkzeug 14 auf.

An einer Seite der Befestigungsplatte 32 ist ein Arm 34 angeordnet, sodass das Werkzeug 14 eine L-Form aufweist. An dem Arm 34 ist in der Ausführungsform gemäß Fig. 4 das Fixierelement 16 angeordnet. Dieses weist einen vorderen Schenkel 20a sowie einen hinteren Schenkel 20b auf und ist somit nach Art eines U-Profils ausgebildet.

Zudem ist ein Verbindungselement 18 vorgesehen, welches an dem Werkzeug 14, in der Ausführungsform gemäß Fig. 4 speziell an einer Unterseite der Befestigungsplatte 32 angeordnet ist. In der Fig. 4 ist die Kassette 12 mit dem darin angeordneten Inhalt 22, welcher aus Ampullen gebildet ist, in der Aufnahmeform 6 angeordnet. Die Aufnahmeform 6 ist mit den Haltestiften 26 an dem Verbindungselement 18 arretiert.

In der Ausrührungsform gemäß Fig. 4 sind die Schenkel 20a, 20b jeweils zwischen einer Wandung W der als Pappkarton ausgebildeten Kassette 12 und dem Inhalt 22 angeordnet. Hierdurch ist sichergestellt, dass lediglich der Inhalt 22 durch eine Verschiebung des Fixierelements 16 relativ zur Aufnahmeform 6 auf ein Förderband 28 der Verarbeitungsmaschine 24 verbracht wird.

Fig. 4 zeigt die Anordnung von Aufnahmeform 6 und Werkzeug 14, wie sie zur Positionierung in oder an der Verarbeitungsmaschine 24 von einem Ablageort 41 (vgl. Fig. 5) verbracht wird. Der Inhalt 22 ist zu den Seiten hin durch die Seitenwände 10 der Aufnahmeform 6 und zu der Vorderseite und zu der Rückseite hin durch den vorderen Schenkel 20a beziehungsweise durch den hinteren Schenkel 20b gegen ein Umfallen und/oder Herabfallen gestützt.

Fig. 5 zeigt eine Draufsicht auf eine Verarbeitungsstraße 38 mit einem Roboter 2 sowie mit einer Verarbeitungsmaschine 24. Zum Bestücken der Verarbeitungsmaschine 24 mit dem Inhalt 22 der Kassette 12 wird eine Aufnahmeform 6, in der eine gefüllte Kassette 12 angeordnet ist von dem Ablageort 41 gegriffen. Hierzu dient das Werkzeug 14.

Mittels des Roboters 2 wird die Aufnahmeform 6 an die Verarbeitungsmaschine 24 verbracht und dort auf einer Ablage 41 abgestellt. Anschließend erfolgt eine Entriegelung des Verbindungselements 18 mit den Haltestiften 26 der Aufnahmeform 6. Daran anschließend wird das Werkzeug 14 in eine Längsrichtung LR verfahren. Hierbei schiebt das innerhalb der Aufnahmeform 6 angeordneten Fixierelement 16 den Inhalt 22 der Kassette 12 mit und platziert diesen auf dem Förderband 28. Damit die Aufnahmeform 6 während des Verschiebens ortsfest gehalten wird, weist die Verarbeitungsmaschine 24 in einer Ausführungsform zwei Zapfen 40 auf, die als Anschlag für die Aufnahmeform 6 dienen. Damit sich die Kassette 12 nicht verschiebt, wird diese in einer Ausführungsform durch die Haltelöcher 30 beispielsweise mittels eines Unterdrucks gehalten (nicht dargestellt). Anschließend nimmt das Werkzeug 14 die Aufnahmeform 6 mit der leeren Kassette 12 auf und verfährt sie beispielsweise an den Ablageort 41 zurück, sodass dort beispielsweise die leere Kassette 12 gegen eine volle Kassette 12 getauscht werden kann. In einer Ausführungsform ist eine Steuereinheit 42 vorgesehen, die beispielsweise Teil der Verarbeitungsstraße 38 ist, die dazu eingerichtet ist, den Roboter 2 mit dem Werkzeugkopf 4 derart anzusteuern, dass die Verarbeitungsmaschine 24 mit dem innerhalb der Kassette 12 befindlichen Inhalt 22 bestückt wird. Weiterhin ist in einer Ausführungsform eine Identifikationseinheit 44 vorgesehen, die beispielsweise an dem Roboter 2 angeordnet ist, die dazu eingerichtet ist, einen Fehler im Inhalt 22 der Kassette 12 zu identifizieren.

In Fig. 6 ist eine perspektivische Ansicht einer alternativen Ausführungsform des Werkzeugkopfes 4 gezeigt. In dieser Ausführungsform handelt es sich um einen Werkzeugkopf 4, der dazu eingerichtet ist, eine leere Kassette 12 mit einem Inhalt 22, der die Verarbeitungsmaschine 24 verlässt, insbesondere mit Ampullen zu bestücken (dieser Vorgang kann auch als Feed-Out-Vorgang bezeichnet werden).

Hierzu weist der Werkzeugkopf 4 gemäß Fig. 6 zwei relativ zueinander verfahrbare Halter 46a und 46b auf, von denen in Fig. 6 lediglich der vordere Halter 46a erkennbar ist. Die Halter 46a und 46b sind als Kämme ausgebildet. In einer Ausführungsform ist zumindest einer der Halter 46a in einer Hochachse HA verfahrbar ausgebildet. Zum Bestücken der leeren Kassette 12 mit dem Inhalt 22, verfährt der hintere Halter 46b in Richtung der Öffnung O der Aufnahmeform 6, die mit einer leeren Kassette 12 bestückt an dem Werkzeugkopf 4 angeordnet ist. Der hintere Halter 46b dient beim Bestücken der Kassette 12 als ein Anschlag für die die Verarbeitungsmaschine 24 verlassenden Ampullen. Der hintere Halter 46b verfährt dann in einer Geschwindigkeit, die in einer Ausführungsform einer Geschwindigkeit entspricht, mit der die Ampullen die Verarbeitungsmaschine 24 verlassen, in Richtung der Rückseite R. Der vordere Halter 46a ist währenddessen in Richtung der Hochachse HA verfahren, also oberhalb der Ampullen angeordnet. Wenn eine vorgegebene Anzahl an Ampullen innerhalb der Kassette 12 angeordnet ist, verfährt der vordere Halter 46a entgegen der Hochachse HA nach unten und verschließt somit zumindest teilweise die Öffnung O der Aufnahmeform 6. Anschließend kann der Werkzeugkopf 4 mit der Aufnahmeform 6 verbracht werden. Die sich innerhalb der Kassette 12 befindlichen Ampullen sind hierbei durch die beiden Halter 46a, 46b sowie die Seitenwände 10 der Aufnahmeform 6 gegen ein Umfallen und/oder Herausfallen geschützt. Um die innerhalb der Kassette 12 angeordneten Ampullen beispielsweise vor herabfallenden Partikeln zu schützen, ist in einer Ausführungsform auf der Befestigungsplatte 32 eine Abdeckplatte 48 angeordnet.

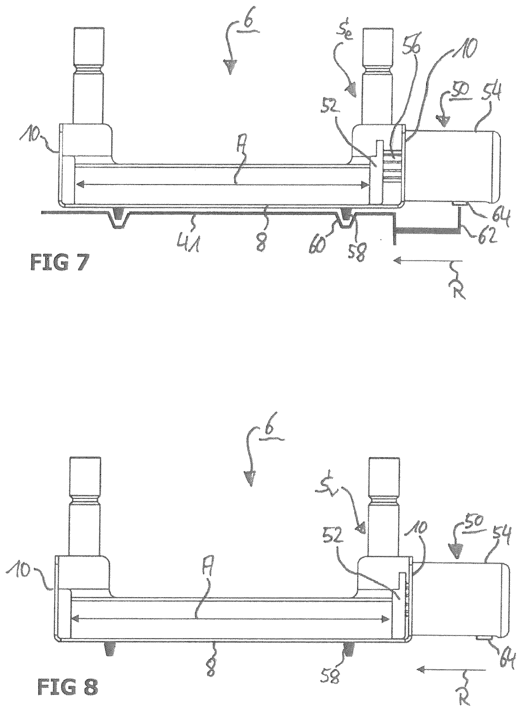

In Fig. 7 ist eine Frontansicht auf eine Aufnahmeform 6 gemäß einer zweiten Ausgestaltungsvarianten gezeigt. Gemäß dieser zweiten Ausgestaltungsvariante weist die Aufnahmeform 6 an einer Seitenwand 10 eine Stützeinheit 50 auf. Die Stützeinheit 50 ist hierbei an der Seitenwand 10 angeordnet. Die Stützeinheit 50 dient einer Einstellung eines Abstands A zwischen der Stützeinheit 50 und der der Stützeinheit 50 gegenüberliegenden Seitenwand 10.

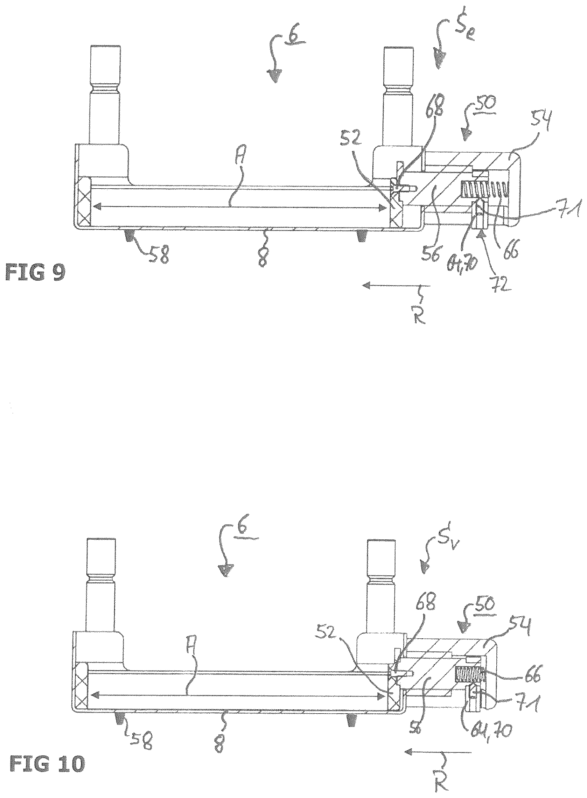

Zudem weist die Stützeinheit 50 eine Stützplatte 52 auf, die an einem innerhalb eines Zylinders 54 einsitzenden Kolbens 56 (vgl. Fig. 9 und 10) angeordnet ist. Der Kolben 56 ist zu dem derart federgelagert, dass die Stützplatte 52 in Richtung der der Stützeinheit 50 gegenüberliegenden Seitenwand 10 federkraftbeaufschlagt und/oder federkraftbeaufschlagbar ist.

In Fig. 7 ist die Aufnahmeform 6 gemäß der zweiten Ausgestaltungsvariante in einer entspannten Stellung Sₑ gezeigt. Dies bedeutet, dass aufgrund der Federkraftbeaufschlagung der Kolben 56 maximal in einen Aufnahmeraum der Aufnahmeform hineinragt.

Die Aufnahmeform 6 ist in Fig. 7 zudem schematisch auf einem Ablageort 41 abgelegt dargestellt. Der Boden 8 der Aufnahmeform 6 weist zumindest zwei Arretierelemente 58 in Form von Pins auf, die zu in dem Ablageort 41 ausgebildeten Vertiefungen 60 korrespondierend ausgebildet sind. Durch die innerhalb den Vertiefungen 60 angeordneten Arretierelemente 58, ist ein Verrutschen bzw. Verschieben der Aufnahmeform 6 verhindert, wenn die Aufnahmeform 6 auf dem bzw. am Ablageort 41 abgelegt ist und wenn der Abstand A eingestellt wird. Die Arretierelemente 58 sind beispielsweise entweder zylindrisch oder konisch ausgebildet und weisen, insbesondere bei einer zylindrischen Ausgestaltung, einen Durchmesser mit einem Wert im Bereich von 2mm bis 10mm und speziell im Bereich zwischen 4mm und 6mm auf. Weiterhin sind auch mehrere an dem Boden 8 angeordnete Arretierelemente 58 denkbar. So können alternativ in jeder der Ecken der Aufnahmeform 6 und speziell des Bodens 8 ein Arretierelement 56 angeordnet sein.

Zudem weist der Ablageort 41 ein Spannelement 62 auf, welches zu einem Verschiebeelement 64 der Stützeinheit 50 (vgl. Fig. 9 und 10) ausgebildet ist. Das Verschiebeelement 64 ist an dem Kolben 56 angeordnet.

Das Spannelement 62 ist in und entgegen einer Verschieberichtung R beispielswiese pneumatisch verschiebbar. Zum Einstellen des Abstandes A wird das Spannelement 62 innerhalb des Verschiebeelements 64 angeordnet und danach entweder in oder entgegen der Richtung R verschoben. Hierdurch zieht das Verschiebeelement 64 den Kolben 56 und somit auch die Stützplatte 52 mit. Der Abstand A kann daher vergrößert oder verkleinert werden.

Aufgrund dessen, dass in Fig. 7 die Stützeinheit 50 in der entspannten Stellung Sₑ dargestellt ist, weist der Abstand A in Fig. 7 den kleinstmöglich einstellbaren Wert auf.

Fig. 8 zeigt die Aufnahmeform 6 gemäß der zweiten Ausgestaltungsform in einer vorgespannten Stellung Sᵥ. Der Übersichtlichkeit halber ist in Fig. 8 auf die Darstellung des Ablageortes 41 sowie auf die Darstellung des Spannelements 62 verzichtet. Wie aus der Stellung der Stützplatte 52 in der Fig. 8 erkennbar ist, liegt diese in der vorgespannten Stellung Sᵥ nahezu bündig an der Seitenwand 10 der Aufnahmeform 6 an. Das Verschiebeelement 64 der Stützeinheit 50 liegt entsprechend ebenfalls an einem (in der Bildebene betrachtet) rechten Anschlag des Zylinders 54 an. Der Abstand A zwischen der Stützplatte 52 und der der Stützplatte 52 gegenüberliegenden Seitenwand 10 weist somit in der vorgespannten Stellung Sᵥ gemäß Fig. 8 den größtmöglich einstellbaren Wert auf. Zum Verbringen der Stützplatte 52 von der entspannten Stellung Sₑ in die vorgespannten Stellung Sᵥ wird gemäß den Ausführungen zur Fig. 7 durch ein Verschieben des Spannelements 62 entgegen der Verschieberichtung R (in der Bildebene nach rechts) erreicht.

Zur Erklärung der Mechanismus ist in Fig. 9 ein Querschnitt durch die Aufnahmeform 6 mit der Stützeinheit 50 in der entspannten Stellung Sₑ dargestellt.

Um die bereits vorstehend erläuterte Federkraftbeaufschlagung des Kolbens 56 und den dadurch erreichten Federmechanismus zu ermöglichen, weist die Stützeinheit 50 ein Federelement 66, beispielsweise eine Helixfeder, auf. Diese ist zum einen an eine Innenseite einer Stirnfläche des Zylinders 54 und mit ihrem anderen Ende an einem Ende des Kolbens 56 angeordnet. Fig. 9 zeigt hierbei das Federelement 66 in seiner maximal gestreckten Stellung, also wenn das Federelement 66 entspannt ist.

Weiterhin ist die Stützplatte 52 mit einem Befestigungsmittel 68 an dem Kolben 56 angeordnet. Das Befestigungsmittel 66 ist hierbei bündig mit der Stützplatte 52 ausgebildet, d. h. die in den Aufnahmeraum der Aufnahmeform 6 orientierte Seite der Stützplatte 52 weist eine ebene Fläche auf.

Das Verschiebeelement 64 ist im Ausführungsbeispiel gemäß Fig. 9 mit Hilfe einer Schelle 70 an dem Kolben 56 verschiebungssicher angeordnet, insbesondere befestigt. Weiterhin weist das Verschiebelement 64 einen Kegelkopfbolzen 71 auf, der beispielsweise mit einem Gewinde versehen ist. Der Kegelkopfbolzen 71 dient hierbei einer Anpassung der entspannten Stellung Sₑ. Hierbei wird zunächst der Kolben 56 und die Stützplatte 52 in eine Stellung verfahren, die der entspannten Stellung Sₑ entsprechen soll. Anschließend wird der Kegelkopfbolzen 71 durch das Gewinde in Richtung des Federelements 66 in das Verschiebeelement 64 geschraubt, sodass eine Spitze des Kegelkopfbolzens 71 zwischen zwei Windungen des Federelements 66 angeordnet wird und den Federmechanismus (insbesondere ein weiteres Ausfedern des Federelements) somit blockiert. Das Verschiebeelement 64 weist zudem eine Öffnung 72 auf, in die das bolzen-, oder stiftartige Spannelement 62 zum Verschieben des Kolbens 56 sowie der Stützplatte 52 ein greifen kann; wie in Fig. 7 schematisch dargestellt.

Analog zu der in Fig. 9 in der entspannten Stellung Sₑ gezeigten Stützeinheit 50, ist in Fig. 10 ein Querschnitt durch die sich innerhalb der vorgespannten Stellung Sᵥ befindliche Aufnahmeform 6 gemäß der zweiten Ausgestaltungsvariante gezeigt. Um Wiederholungen zu vermeiden, wird hierbei nun lediglich auf die Unterschiede im Vergleich zu der in Fig. 9 dargestellten Stellung eingegangen.

In der vorgespannten Stellung Sᵥ ist das Federelement 66 in einer maximal gestauchten Stellung angeordnet. Hierdurch weist der Abstand A den größtmöglich einstellbaren Wert auf.

Vor einem Einbringen einer Kassette 12 in die Aufnahmeform 6 gemäß der zweiten Ausgestaltungsvariante, befindet sich die Stützeinheit 50 und speziell die Stützplatte 52 vorzugsweise in der vorgespannten Stellung Sᵥ. Nach einem Bestücken der Aufnahmeform 6 mit der Kassette 12 verfährt anschließend der Kolben 56 sowie die Stützplatte 52 in Verschieberichtung R auf die Seitenwandung der Kassette 12 zu. Durch die Federkraft des Federelements 66 wird die Kassette 12 somit zwischen die der Stützeinheit 50 gegenüberliegenden Seitenwand 10 und der Stützplatte 52 gehalten. Hierbei übt das Federelement 66 eine Federkraft auf die Kassette 12 aus, die zwar groß genug ist, die Kassette 12 verrutsch sicher zu halten, jedoch ausreichend klein ist, um die Kassette 12 sowie deren Inhalt 22 nicht zu beschädigen.

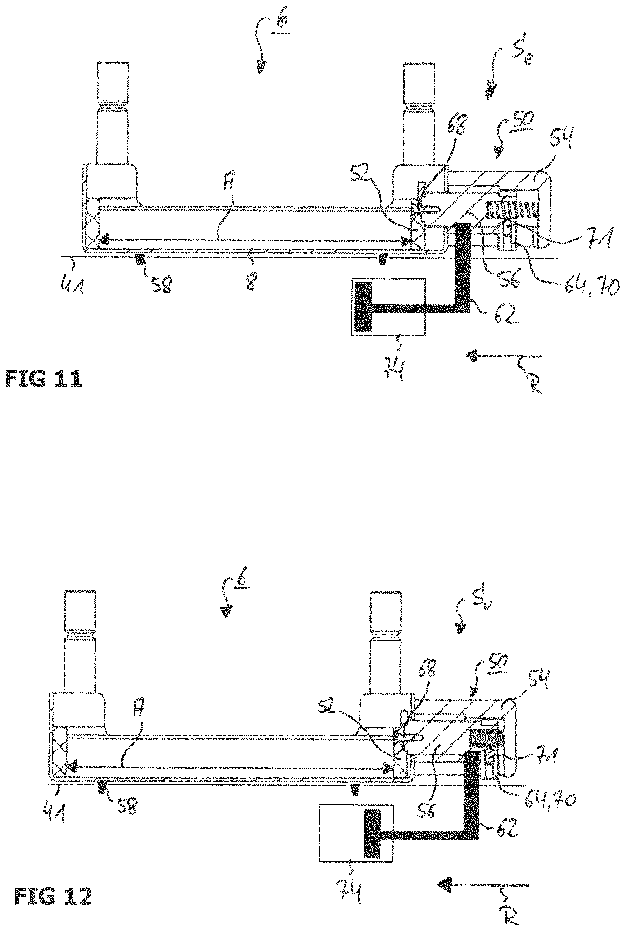

In Fig. 11 ist ein Querschnitt durch eine Aufnahmeform 6 gemäß einer dritten Ausgestaltungsvariante in der entspannten Stellung Sₑ dargestellt. Um Wiederholungen zu vermeiden, wird nachfolgend lediglich auf die Unterschiede zu den bereits vorstehend beschriebenen Ausgestaltungsvarianten eingegangen.

Das Spannelement 62 ist in der Ausgestaltungsvariante gemäß Fig. 11 derart ausgebildet, dass es nicht in der Öffnung 72 einsitzt, sondern vielmehr zum Verschieben des Kolbens 56 und der Stützplatte 52 an einer Seite des Verschiebeelements 64 anliegt. Das Verschieben des Kolbens 56, also das Verbringen der Aufnahmeform6 und speziell der Stützeinheit 50 von der entspannten Stellung Sₑ in die vorgespannte Stellung Sᵥ (vgl. Fig. 12) erfolgt somit derart, dass das Spannelement 62 das Verschiebeelement 64 (in der Bildebene betrachtet) nach rechts verschiebt und somit den Abstand A vergrößert.

In der entspannten Stellung Sₑ liegt jedoch das Spannelement 62 vorzugsweise nicht an dem Verschiebeelement 64 an, sodass dieses den kleinstmöglich einstellbaren Abstand lediglich durch die Ausdehnung des Federelements 66 einnimmt.

In Fig. 12 ist, wie bereits vorstehend erwähnt, ein Querschnitt durch die Aufnahmeform 6 gemäß der dritten Ausgestaltungsvariante in der vorgespannten Stellung Sᵥ gezeigt. Hierbei ist das Spannelement 62 derart (in der Bildebene) nach rechts verfahren, dass das Verschiebeelement 64 und speziell durch die Stützplatte 52 der Stützeinheit 50 der größtmöglich einstellbare Abstand A eingestellt ist.

Das Spannelement 62 ist in der dritten Ausgestaltungsvariante beispielsweise mit einem Hubkolben 74 verbunden, der pneumatisch oder hydraulisch betrieben wird, um das Spannelement in oder entgegen die Verschieberichtung R zu verschieben. Diese Art der Verschiebung des Spannelements 62 ist auch für das Spannelement 62 gemäß der zweiten Ausgestaltungsvariante denkbar.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne dem Gegenstand der Erfindung zu verlassen. Insbesondere sind ferner alle im Zusammenhang mit den Ausführungsbeispielen geschriebenen Einzelmerkmale auch auf andere Weise miteinander kombinierbar, ohne den Gegenstand der Erfindung zu verlassen.

### Bezugszeichenliste

- 2: Roboter
- 4: Werkzeugkopf
- 6: Aufnahmeform
- 8: Boden
- 10: Seitenwand
- 12: Kassette
- 14: Werkzeug
- 16: Fixierelement
- 18: Verbindungselement
- 20a: vorderer Schenkel
- 20b: hinterer Schenkel
- 22: Inhalt
- 24: Verarbeitungsmaschine
- 26: Haltestift
- 28: Förderband
- 30: Halteloch
- 32: Befestigungsplatte
- 34: Arm
- 35: Spalt
- 36: Seitenspalt
- 38: Verarbeitungsstraße
- 40: Zapfen
- 41: Ablageort
- 42: Steuereinheit
- 44: Identifikationseinheit
- 46a: vorderer Halter
- 46b: hinterer Halter
- 48: Abdeckplatte
- 50: Stützeinheit
- 52: Stützplatte
- 54: Zylinder
- 56: Kolben
- 58: Arretierelemente
- 60: Vertiefungen
- 62: Spannelement
- 64: Verschiebeelement
- 66: Federelement
- 68: Befestigungselement
- 70: Schelle
- 71: Kegelkopfbolzen
- 72: Öffnung
- 74: Hubkolben

- A: Abstand
- B: Breite
- L: Länge
- H: Höhe
- LR: Längsrichtung
- HA: Hochachse
- V: Vorderseite
- R: Rückseite
- O: Öffnung
- W: Wandung
- Sₑ: entspannte Stellung
- Sᵥ: vorgespannte Stellung

## Patentansprüche

1. Verfahren zum Betrieb eines Roboters (2) mit einem Werkzeugkopf (4), umfassend die Schritte:
- Bestücken einer insbesondere rechteckigen Aufnahmeform (6) mit einer Kassette (12), wobei die Aufnahmeform (6) mindestens zwei Seitenwände (10) und eine Öffnung (O), insbesondere zum Einbringen und/oder Ausbringen der Kassette (12) umfasst,
- Greifen der Aufnahmeform (6) von oben mit einem Werkzeug (14), das ein Fixierelement (16) aufweist, derart, dass ein vorderer Schenkel (20a) und ein hinterer Schenkel (20b) des Fixierelements (16) einen Inhalt (22) der Kassette (12) an einer Vorderseite (V) bzw. an einer Rückseite (R) stützen,
- Verbringen der Aufnahmeform (6) mittels dem Werkzeug (14),
- Positionierung der Aufnahmeform in oder an einer Verarbeitungsmaschine (24),
- Verschieben des Inhalts (22) der Kassette (12) mittels des Fixierelements (16) relativ zur Aufnahmeform (6) durch die Öffnung, um den Inhalt in die Verarbeitungsmaschine (24) einzubringen.

2. Verfahren nach Anspruch 1,
**dadurch gekennzeichnet, dass**
das Werkzeug (14) zum Greifen der Aufnahmeform (6) derart mit dieser mechanisch gekoppelt wird, dass ein Verbindungselement (18) mit zumindest einem Haltestift (26) der Aufnahmeform (6) arretiert.

3. Verfahren nach einem der vorhergehenden Ansprüche, insbesondere nach Anspruch 2,
**dadurch gekennzeichnet, dass**
das Verbindungselement (18) derart mit der Aufnahmeform (6) mechanisch gekoppelt wird, dass die mechanische Kopplung in zwei Richtungen lösbar ist.

4. Verfahren nach einem der vorhergehenden Ansprüche,
**dadurch gekennzeichnet, dass**
die Aufnahmeform (6) derart, insbesondere von oben, von dem Werkzeug (14) gegriffen wird, dass die beiden Schenkel (20) jeweils zwischen eine Wandung (W) der Kassette (12) und dem Inhalt (22) der Kassette (12) angeordnet werden.

5. Werkzeugkopf (4) für einen Roboter, aufweisend:
- ein Werkzeug (14);
- eine Aufnahmeform (6) zur Aufnahme einer Kassette (12), wobei die Aufnahmeform einen Boden (8), mindestens zwei Seitenwände (10) und eine Öffnung (O) umfasst,
**dadurch gekennzeichnet, dass**
die Aufnahmeform (6) lösbar mit dem Werkzeug (14) verbindbar und/oder verbunden ist.

6. Werkzeugkopf (4) nach Anspruch 5,
**dadurch gekennzeichnet, dass**
das Werkzeug ein Fixierelement (16) mit einem vorderen Schenkel (20a) und einem hinteren Schenkel (20b) umfasst, wobei in mindestens einem (verbundenen) Zustand mindestens ein Schenkel (20a, 20b) die Öffnung (O) der Aufnahmeform (6) mindestens teilweise verschließt, vorzugsweise die Schenkel (20) in dem Zustand die Aufnahmeform (6) vorder- und rückseitig begrenzen.

7. Werkzeugkopf (4) nach einem der Ansprüche 5 oder 6,
**dadurch gekennzeichnet, dass**
die Aufnahmeform (6) im Boden (8) zumindest ein Halteloch (30) aufweist.

8. Werkzeugkopf (4) nach einem der Ansprüche 5 bis 7,
**dadurch gekennzeichnet, dass**
das Werkzeug (14) eine L-Form aufweist mit einer Befestigungsplatte (32) zur reversiblen Anordnung des Werkzeuges (4) an einem Roboter (2) sowie einem an der Befestigungsplatte (32) seitlich angeordneten Arm (34), wobei an dem Arm (34) das Fixierelement (16) angeordnet ist.

9. Werkzeugkopf (4) nach dem Anspruch 8,
**dadurch gekennzeichnet, dass**
zwischen der Befestigungsplatte (32) und dem Fixierelement (16) ein Spalt (35) ausgebildet ist.

10. Werkzeugkopf (14) nach einem der Ansprüche 5 bis 9,
**dadurch gekennzeichnet, dass**
zumindest eine der Seitenwände (10) relativ zur anderen Seitenwand (10) zur Einstellung eines Abstandes (A) verschiebbar angeordnet ist und/oder an zumindest einer Seitenwand (10) eine Stützeinheit (50) zur Einstellung eines Abstandes (A) zwischen der Stützeinheit (50) und der der Stützeinheit (50) gegenüberliegenden Seitenwand (10) angeordnet ist.

11. Werkzeugkopf (14) nach Anspruch 10,
**dadurch gekennzeichnet, dass**
die Stützeinheit (50) eine Stützplatte (52) und einen Zylinder (54) mit einem in dem Zylinder (54) einsitzenden und federgelagerten Kolben (56) aufweist, wobei die Stützplatte (52) an dem Kolben angeordnet ist und in Richtung der der Stützeinheit (50) gegenüberliegenden Seitenwand (10) federkraftbaufschlagt und/oder federkraftbaufschlagbar ist.

12. Werkzeugkopf (14) nach Anspruch 11,
**dadurch gekennzeichnet, dass**
die Aufnahmeform (6) ein Verschiebeelement (64) aufweist, das an dem Kolben (56) angeordnet ist und dazu ausgebildet ist, mit einem korrespondierenden Spannelement (62) zur Einstellung des Abstandes (A) zusammenzuwirken.

13. Werkzeugkopf (14) nach Anspruch 12,
**dadurch gekennzeichnet, dass**
das Verschiebeelement (64) und das korrespondierende Spannelement (62) derart zusammenwirken, dass die Stützplatte (52) von einer entspannten Stellung (Sₑ) in eine vorgespannte Stellung (Sᵥ) verschiebbar ist.

14. Werkzeugkopf (14) nach einem der Ansprüche 5 bis 13,
**dadurch gekennzeichnet, dass**
an dem Boden (8) der Aufnahmeform (6) zumindest zwei Arretierelemente (58) und an einem Ablageort (41) zumindest zwei zu den Arretierelementen (58) korrespondierend ausgebildete Vertiefungen (60) angeordnet sind, zum Halten der am Ablageort (41) abgelegten Aufnahmeform (6).

15. Verarbeitungsstraße (38) mit einem Roboter (2) und mit einer Verarbeitungsmaschine (24), wobei der Roboter (2) einen Werkzeugkopf (4), insbesondere nach einem der Ansprüche 8 bis 20, aufweist.
